# EUROPEAN PATENT SPECIFICATION

(11) **EP 4 443 616 B1**
(45) Date of publication and mention of the grant of the patent: **25.02.2026**
(21) Application number: 22913699.9
(22) Date of filing: 19.10.2022
(51) Int. Cl.: H01M 50/20, H01M 50/30, H01M 10/48, A62C 3/16, A62C 37/36

(54) **ENERGY STORAGE SYSTEM AND CONTROL METHOD THEREFOR**
ENERGIESPEICHERSYSTEM UND STEUERUNGSVERFAHREN DAFÜR
SYSTÈME DE STOCKAGE D'ÉNERGIE ET PROCÉDÉ DE COMMANDE ASSOCIÉ

(30) Priority: 27.12.2021 CN 202111612773
(43) Date of publication of application: 09.10.2024
(73) Proprietor: Huawei Digital Power Technologies Co., Ltd., Shenzhen, Guangdong 518043 (CN)
(72) Inventor: WU, Zhipeng, Shenzhen, Guangdong 518043 (CN); YU, Shijiang, Shenzhen, Guangdong 518043 (CN)
(74) Representative: Isarpatent
(86) International application number: PCT/CN2022/126268
(87) International publication number: WO 2023/124436

(56) References cited:
- CN-A- 110 634 262
- CN-A- 113 593 194
- CN-A- 113 782 851
- CN-A- 113 782 851
- CN-A- 114 284 614
- CN-U- 211 798 396
- CN-U- 213 642 915

## Description

### TECHNICAL FIELD

This disclosure generally relates to the field of safety protection technologies for an energy storage system, and the invention more specifically relates to an energy storage system that can provide fire prevention, explosion prevention, and fire extinguishing functions and a control method thereof.

### BACKGROUND

In scenarios such as a photovoltaic power station and a wind power station, a power generation curve is greatly different from a power grid load curve. Therefore, an energy storage system may be usually provided to store and adjust electric energy, to ensure reliability and stability of a system. A current energy storage system (Energy Storage System, ESS), for example, a lithium battery energy storage system, usually uses a design solution of a container prefabricated cabin, to facilitate production, installation, maintenance, and fast deployment.

To protect electrical and electronic components in the energy storage system, the container of the energy storage system needs to be protected against foreign bodies such as dust and water. Therefore, a high foreign body ingress protection (Ingress Protection, IP) rating, for example, IP 54 or higher, is usually required. However, in some cases, energy storage components such as a lithium battery may generate flammable and explosive gas in the container. This high-IP-level container layout may have ignition and explosion risks due to accumulation of the flammable and explosive gas. Currently, there is no effective means to resolve the foregoing safety problem.

CN 110634262 A discloses a fire warning method for a battery prefabricated cabin of a lithium iron phosphate energy storage power station, and relates to the field of fire protection. A fire alarm controller, a fire detection alarm system and a fire extinguishing system which are connected to the fire alarm controller, a BMS battery management system, and a combustible gas explosion-proof system connected to the BMS battery management system are arranged in the battery prefabricated cabin. A combustible gas monitoring device is added to the fire detection alarm system, alarm thresholds in early warning and later warning stages are set respectively during combustible gas monitoring, and the combustible gas explosion-proof system and the fire extinguishing system are controlled to act in different alarm stages respectively.

### SUMMARY

To resolve the foregoing problem, embodiments of this disclosure provide an improved energy storage system and a control method for the energy storage system.

According to a first aspect of the invention, an energy storage system according to claim 1 is provided.

The sensing apparatus and the ventilation apparatus for flammable gas in the energy storage system are disposed, to detect accumulation of the flammable gas generated by thermal runaway of the energy storage device in time, and control the ventilation apparatus to exhaust the flammable gas from the cabinet. Therefore, before a fire occurs, an active preventive measure can be used to reduce an occurrence possibility of the fire, and further avoid occurrence of ignition and explosion accidents.

In some embodiments of the first aspect, the first sensing apparatus includes a plurality of gas sensing components, and the plurality of gas sensing components are configured to sense at least one of the following types of flammable gas: carbon monoxide, hydrogen, and a volatile organic compound. In this implementation, main components of the flammable gas can be sensed comprehensively and accurately.

In some embodiments of the first aspect, at least a part of the plurality of gas sensing components is arranged at the top of the cabinet. In this implementation, because densities of most types of flammable gas are lower than that of air, arranging the gas sensing components at the top is more conducive to implementing precise detection. In addition, a quantity of arranged gas sensing components can be reduced, and therefore costs can be reduced.

The ventilation apparatus includes an inlet portion and an outlet portion, the inlet portion is disposed on a first side portion of the cabinet, the outlet portion is disposed on a second side portion of the cabinet, the first side portion is opposite to the second side portion, and a height of the inlet portion is lower than a height of the outlet portion. In this implementation, gas convection can be formed between the inlet portion and the outlet portion, and an overall gas flow direction from bottom to top is conducive to exhausting the flammable gas with a low density from the outlet portion.

The inlet portion includes two inlets arranged separately from each other, and the two inlets are distributed triangularly with the outlet portion. In this implementation, a triangular air duct design of bottom air inlet and top air outlet can be provided in the cabinet, to effectively avoid forming a gas flow loop in the cabinet, and ensure that flammable gas at different gas densities and at different positions can be smoothly exhausted from the cabinet.

In some embodiments of the first aspect, the inlet portion includes a zigzag channel that is configured to receive and flow gas from an outer part of the cabinet and a first filter layer that is configured to filter the gas passing through the inlet portion. In this implementation, it can be ensured that when air flows into the cabinet, a foreign body is prevented from entering the cabinet to affect working of the energy storage system. In addition, the inlet portion can also provide a pressure relief function when pressure in the cabinet is excessively high.

In some embodiments of the first aspect, the outlet portion includes a fan that is configured to drive gas to flow from an inner part of the cabinet to an outer part of the cabinet and a second filter layer that is configured to filter the gas passing through the outlet portion. In this implementation, gas flow inner part and outer part the cabinet can be implemented, and a foreign body can be prevented from entering the cabinet through the outlet portion. In addition, the outlet portion can also provide a pressure relief function when pressure in the cabinet is excessively high.

In some embodiments of the first aspect, the outlet portion further includes a barrier, and the barrier is configured to: close the outlet portion, and open the outlet portion under an action of the gas flowing from the inner part of the cabinet to the outer part of the cabinet. In this implementation, the outlet portion can be opened when ventilation is required, and the outlet portion is closed when ventilation is not required to avoid direct communication between the inner part and the outer part of the cabinet.

In some embodiments of the first aspect, the control apparatus and the fan are isolated from the energy storage device. In this implementation, when the energy storage device generates flammable gas and causes a fire and explosion, the control apparatus and the fan can be protected from being damaged to some extent, so that the control apparatus and the fan can still work after the fire.

In some embodiments of the first aspect, the energy storage system further includes: a second sensing apparatus, disposed in the cabinet, and configured to sense a temperature in the cabinet; a third sensing apparatus, disposed in the cabinet, and configured to sense smoke in the cabinet; and a fire extinguishing apparatus, configured to release a fire extinguishing agent in the cabinet. In this implementation, a high temperature caused by a fire and smoke generated by burning can be sensed in the cabinet, to determine that the fire occurs and extinguish the fire.

In some embodiments of the first aspect, the control apparatus is further configured to receive second sensing information indicating the temperature in the cabinet from the second sensing apparatus; and the generating, based on the first sensing information, a signal for controlling the ventilation apparatus includes: when the concentration of the flammable gas indicated by the first sensing information exceeds a first threshold, determining whether the temperature indicated by the second sensing information exceeds a temperature threshold; and when the temperature does not exceed the temperature threshold, generating a signal for enabling the ventilation apparatus, to enable the flammable gas to be exhausted from the cabinet through the ventilation apparatus.

In some embodiments of the first aspect, the generating, based on the first sensing information, a signal for controlling the ventilation apparatus further includes: when the temperature exceeds the temperature threshold, generating a signal for disabling the ventilation apparatus and enabling the fire extinguishing apparatus, to enable the fire extinguishing apparatus to release the fire extinguishing agent in the cabinet.

In some embodiments of the first aspect, the control apparatus is further configured to: when the concentration of the flammable gas indicated by the first sensing information exceeds a second threshold, generate a signal for turning off a main power circuit of the energy storage system, where the second threshold is less than or equal to the first threshold.

In some embodiments of the first aspect, the control apparatus is further configured to: when the concentration of the flammable gas indicated by the first sensing information is less than a third threshold, generate a signal for disabling the ventilation apparatus, where the third threshold is less than the second threshold.

In some embodiments of the first aspect, the first sensing apparatus includes a plurality of gas sensing components, and in a case of threshold comparison, when concentrations of the flammable gas indicated by sensing information of more than half of the gas sensing components are greater than or less than the threshold, it is determined that the concentration of the flammable gas indicated by the first sensing information is greater than or less than the threshold.

In some embodiments of the first aspect, the control apparatus is further configured to: receive second sensing information from the second sensing apparatus, where the second sensing information indicates the temperature in the cabinet; receive third sensing information from the third sensing apparatus, where the third sensing information indicates a concentration of the smoke in the cabinet; and when the temperature indicated by the second sensing information exceeds a temperature threshold and the concentration of the smoke indicated by the third sensing information exceeds a smoke threshold, generate a signal for disabling the ventilation apparatus and enabling the fire extinguishing apparatus, to enable the fire extinguishing apparatus to release the fire extinguishing agent in the cabinet.

In some embodiments of the first aspect, the control apparatus is further configured to generate, based on a request signal from a user terminal, a signal for enabling the ventilation apparatus.

In some embodiments of the first aspect, the control apparatus is further configured to generate a signal for prompting an operator when the concentration of the flammable gas indicated by the first sensing information is less than a fourth threshold, or after the ventilation apparatus is enabled based on the request signal and a predetermined period of time elapses.

According to a second aspect of the invention, a control method for an energy storage system of the first aspect is provided.

In some embodiments of the second aspect, the control method further includes:
receiving second sensing information from a second sensing apparatus disposed in the cabinet, where the second sensing information indicates a temperature in the cabinet; and the generating, based on the first sensing information, a signal for controlling a ventilation apparatus includes:
when the concentration of the flammable gas indicated by the first sensing information exceeds a first threshold, determining whether the temperature indicated by the second sensing information exceeds a temperature threshold; and when the temperature does not exceed the temperature threshold, generating a signal for enabling the ventilation apparatus, to enable the flammable gas to be exhausted from the cabinet through the ventilation apparatus. In this implementation, when it is determined that the concentration of the flammable gas is excessively high and no fire occurs, the flammable gas can be exhausted from the cabinet in time, to reduce an occurrence possibility of a fire.

In some embodiments of the second aspect, the generating, based on the first sensing information, a signal for controlling a ventilation apparatus further includes: when the temperature exceeds the temperature threshold, generating a signal for disabling the ventilation apparatus and enabling a fire extinguishing apparatus, to enable the fire extinguishing apparatus to release a fire extinguishing agent in the cabinet. In this implementation, when it is determined that a fire has occurred, air flow inner part and outer part the cabinet can be stopped and the fire can be extinguished as soon as possible.

In some embodiments of the second aspect, the control method further includes: when the concentration of the flammable gas indicated by the first sensing information exceeds a second threshold, generating a signal for turning off a main power circuit of the energy storage system, where the second threshold is less than or equal to the first threshold. In this implementation, when thermal runaway occurs in the energy storage device and the flammable gas is released, charging and discharging of the energy storage device are stopped, to prevent the flammable gas from further increasing and reduce a temperature of the energy storage device, to avoid continuous deterioration of system safety.

In some embodiments of the second aspect, the control method further includes: when the concentration of the flammable gas indicated by the first sensing information is less than a third threshold, generating a signal for disabling the ventilation apparatus, where the third threshold is less than the second threshold. In this implementation, after the flammable gas has been almost exhausted from the cabinet and a risk is eliminated, ventilation can be stopped.

In some embodiments of the second aspect, the first sensing apparatus includes a plurality of gas sensing components, and in a case of threshold comparison, when concentrations of the flammable gas indicated by sensing information of more than half of the gas sensing components are greater than or less than the threshold, it is determined that the concentration of the flammable gas indicated by the first sensing information is greater than or less than the threshold. In this implementation, when some sensing components are faulty or abnormal, sensing results of these faulty or abnormal sensing components can be excluded, to avoid misjudgment.

In some embodiments of the second aspect, the control method further includes: receiving second sensing information from a second sensing apparatus disposed in the cabinet, where the second sensing information indicates a temperature in the cabinet; receiving third sensing information from a third sensing apparatus disposed in the cabinet, where the third sensing information indicates a concentration of smoke in the cabinet; and when the temperature indicated by the second sensing information exceeds a temperature threshold and the concentration of the smoke indicated by the third sensing information exceeds a smoke threshold, generating a signal for disabling the ventilation apparatus and enabling a fire extinguishing apparatus, to enable the fire extinguishing apparatus to release a fire extinguishing agent in the cabinet. In this implementation, when it is sensed that both the temperature and the concentration of the smoke are excessively high, it can be determined that a fire has occurred, and the fire is extinguished accordingly.

In some embodiments of the second aspect, the control method further includes: generating, based on a request signal from a user terminal, a signal for enabling the ventilation apparatus. In this implementation, after fire extinguishing is completed, an operator can conveniently connect to the control apparatus of the energy storage system through the user terminal, to enable the ventilation apparatus to exhaust residual flammable gas. This can avoid ignition and explosion that occur when the cabinet is opened, and ensure safety of the operator.

In some embodiments of the second aspect, the control method further includes: generating a signal for prompting an operator when the concentration of the flammable gas indicated by the first sensing information is less than a fourth threshold, or after the ventilation apparatus is enabled based on the request signal and a predetermined period of time elapses. In this implementation, after a fire, the flammable gas in the cabinet can be reduced to a safe level for avoiding ignition and explosion, and the operator is notified that the cabinet can be safely opened.

The following descriptions facilitate understanding of other features of this disclosure.

### BRIEF DESCRIPTION OF DRAWINGS

The foregoing and other features, advantages, and aspects in embodiments of this disclosure become clearer with reference to accompanying drawings and the following detailed descriptions. In the accompanying drawings, same or similar reference numerals represent same or similar elements.
FIG. 1 is a schematic diagram of a structure of an energy storage system according to an embodiment of this disclosure;
FIG. 2 is a sectional view of an inlet portion of a ventilation apparatus according to an embodiment of this disclosure;
FIG. 3 is a three-dimensional view of an outlet portion of a ventilation apparatus according to an embodiment of this disclosure;
FIG. 4 is a schematic block diagram of an energy storage system and a related peripheral device according to an embodiment of this disclosure;
FIG. 5 is a schematic block diagram of a control method for an energy storage system according to an embodiment of this disclosure;
FIG. 6 is a schematic block diagram of an example process of generating, based on first sensing information, a signal for controlling a ventilation apparatus according to an embodiment of this disclosure; and
FIG. 7 is a schematic block diagram of an example process after a fire in an energy storage system is extinguished according to an embodiment of this disclosure.

### DESCRIPTION OF EMBODIMENTS

The following describes embodiments of this disclosure in detail with reference to accompanying drawings. Although some embodiments of this disclosure are shown in the accompanying drawings, it should be understood that this disclosure may be implemented in various forms, and should not be construed as being limited to the embodiments described herein. On the contrary, these embodiments are provided to thoroughly and completely understood this disclosure. It should be understood that the accompanying drawings and embodiments of this disclosure are merely used as examples.

In descriptions of embodiments of this disclosure, the term "include" and similar terms thereof should be understood as open inclusion, that is, "include but are not limited to". The term "based on" should be understood as "at least partially based on". The terms "one embodiment" or "the embodiment" should be understood as "at least one embodiment". The terms "first", "second", and the like may indicate different or same objects. Other explicit and implicit definitions may be further included below.

An energy storage component (for example, a lithium battery) in an energy storage system usually uses a material with strong activity such as a lithium ion material and uses a flammable electrolyte. Therefore, thermal runaway may occur on the energy storage component in a case of an internal/external short circuit, a high temperature, overcharge, overpressure, or the like, and after the thermal runaway, a pressure relief valve (open valve for short) is opened to release a large amount of flammable and explosive gas, and a large amount of heat is also generated. However, the energy storage system usually uses a high-IP-level container with good sealing performance. Although this prevents foreign bodies such as water and dust from entering the container, the released flammable and explosive gas is not easy to spread, and therefore are accumulated in the container. The gas may burn once the gas encounters a fire and a high temperature, and may also cause ignition and explosion accidents when the flammable and explosive gas reaches a specific concentration.

In a conventional solution, a gas fire extinguishing device may be configured in a prefabricated cabin or container of the energy storage system. When a fire occurs, the gas fire extinguishing device releases a fire extinguishing medium in the prefabricated cabin or container to extinguish the fire. However, the gas fire extinguishing device in the conventional solution can only extinguish the fire after the fire occurs, and cannot effectively avoid occurrence of ignition and explosion in some cases. In addition, the flammable and explosive gas generated by the energy storage component is still accumulated in the container after the fire is extinguished, and this may bring a safety risk for handling after the fire is extinguished.

Embodiments of this disclosure provide an improved energy storage system and a control method for the energy storage system. A sensing apparatus and a ventilation apparatus for flammable gas in a cabinet of the energy storage system are disposed, to detect accumulation of flammable gas generated by an energy storage device such as a lithium battery in time, and exhaust the flammable gas from the cabinet. In this way, the flammable gas in the cabinet can be actively sensed and exhausted before a fire occurs, so that an occurrence possibility of the fire is reduced. In addition, because a concentration of the flammable gas is reduced in time, occurrence of ignition and explosion accidents is further avoided.

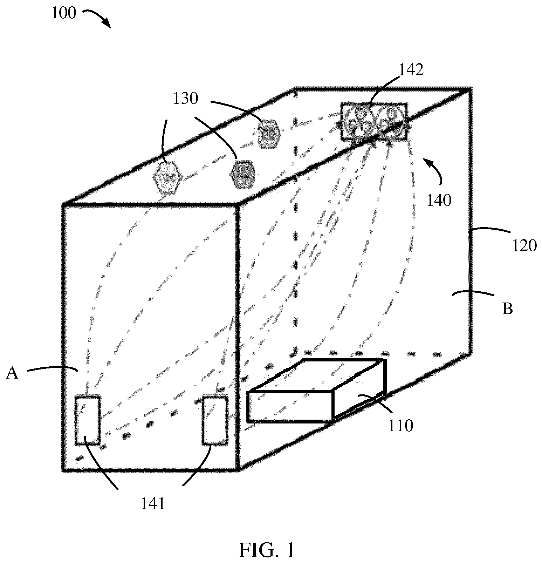

FIG. 1 is a schematic diagram of a structure of an energy storage system 100 according to an embodiment of this disclosure. In an example, the energy storage system 100 may be used in scenarios such as a photovoltaic power station and a wind power station. For example, the energy storage system 100 may be connected to a power generation system, a power transmission system, or a power grid through electrical devices such as a power converter and an electrical switch (for example, a circuit breaker or a disconnect switch), to receive and store electric energy generated by the power generation system, and output the electric energy to the power transmission system or the power grid as required. However, it may be understood that a use range of the energy storage system 100 is not limited thereto, and the energy storage system 100 may be used in another appropriate scenario in which energy storage is required.

As shown in FIG. 1, the energy storage system 100 may include an energy storage device 110 and a cabinet 120, where the energy storage device 110 is disposed in the cabinet 120. In an example, the energy storage device 110 may be an energy storage battery, including but not limited to a ternary lithium battery, a lithium ferrophosphate battery, a lithium titanate battery, a lead-acid battery, a lead carbon battery, and the like. In addition, the energy storage device 110 may alternatively be another type of device that can implement electric energy storage, for example, a supercapacitor. The cabinet 120 may be a cabinet in a form of a container, an outdoor cabinet, or the like, and the energy storage device 110 may be placed in the cabinet 120 to form a prefabricated cabin type energy storage system. To protect the energy storage device 110 and protect other electrical and electronic devices placed in the cabinet 120, the cabinet 120 may have, for example, a specific IP level, to prevent foreign bodies such as dust and water from intruding into the cabinet 120 of the energy storage system 100 and then affecting performance and an operation of the energy storage system 100. In some embodiments, the cabinet 120 may be provided with a pressure relief valve, and may release internal gas when internal pressure is excessively high, to avoid disintegration of the cabinet 120 due to excessively high pressure caused by a large amount of fire extinguishing gas erupting during fire extinguishing.

In this embodiment of this disclosure, the energy storage system 100 may include a first sensing apparatus 130. The first sensing apparatus 130 is disposed in the cabinet 120, and is configured to sense a concentration of flammable gas in the cabinet 120. In an example, when thermal runaway occurs, the energy storage battery or energy storage device such as a lithium battery opens a valve and releases flammable gas. The flammable gas is accumulated in the cabinet 120, and may cause a fire or explosion. The first sensing apparatus 130 disposed in the cabinet 120 may sense a concentration of the flammable gas in real time, to determine whether flammable gas accumulation exists.

In some embodiments, the first sensing apparatus 130 may include a plurality of gas sensing components, and the plurality of gas sensing components are configured to sense at least one of carbon monoxide CO, hydrogen H₂, and a volatile organic compound (Volatile Organic Compound, VOC). Specifically, flammable gas released by a battery (for example, a lithium battery) commonly used for energy storage after thermal runaway includes a plurality of main components, and these main components include carbon monoxide, hydrogen, and a volatile organic compound. Therefore, a plurality of gas sensing components that can sense these types of flammable gas may be disposed, to sense any one, any two, or three of the carbon monoxide, the hydrogen, and the volatile organic compound. For example, three or more gas sensing components may be disposed to separately sense the three types of flammable gas. In this manner, the flammable gas accumulation in the energy storage system can be sensed more specifically and accurately. In addition, the plurality of gas sensing components for detecting various types of flammable gas may be evenly arranged in the cabinet 120, for example, arranged in the cabinet 120 at a basically same space spacing, to implement comprehensive detection of space in the cabinet 120, and avoid a detection dead angle. Optionally, the plurality of gas sensing components may be alternatively arranged in the cabinet 120 in another manner. For example, more gas sensing components may be arranged near the energy storage device 110. In some embodiments, at least a part of the plurality of gas sensing components may be arranged at the top of the cabinet 120. Specifically, considering that densities of the carbon monoxide, the hydrogen, and the volatile organic compound are all less than a density of air, these types of flammable gas are usually accumulated at the top of the cabinet 120. Therefore, some gas sensing components may be arranged at the top of the cabinet 120, or even all gas sensing components may be arranged at the top. In this manner, the flammable gas accumulation can be detected efficiently and accurately by using a small quantity of sensing components, and this helps reduce costs.

However, it should be noted that the flammable gas that may exist in the cabinet 120 is not limited to the foregoing three types of gas, and another type of flammable gas may exist depending on a type of the energy storage device. Therefore, a sensing apparatus or sensing component that can sense the another type of gas may be further disposed in the cabinet 120. In addition, a quantity of the gas sensing components may alternatively be any appropriate quantity, and may be comprehensively considered based on accuracy and overall costs of detection.

In this embodiment of this disclosure, the energy storage system 100 includes a ventilation apparatus 140, where the ventilation apparatus 140 is disposed on the cabinet 120, and is configured to exhaust the flammable gas from the cabinet 120. In an example, because the cabinet 120 is relatively enclosed space, especially for a cabinet 120 having a high IP level, the flammable gas generated by the energy storage device 110 when thermal runaway occurs may be accumulated in the cabinet 120. The flammable gas accumulation increases an occurrence possibility of a fire, and may even cause an explosion accident if the concentration of the flammable gas reaches a specific level. Therefore, the ventilation apparatus 140 may be disposed on the cabinet 120, to exhaust the flammable gas generated by the energy storage device 110 from the cabinet 120 in time. Such a preventive ventilation means can actively eliminate a fire risk, and therefore improve safety of the energy storage system 100.

In some embodiments of this disclosure, the ventilation apparatus 140 includes an inlet portion 141 and an outlet portion 142. The inlet portion 141 is disposed on a first side portion A of the cabinet 120, and the outlet portion 142 is disposed on a second side portion B of the cabinet 120. The first side portion A is opposite to the second side portion B, and a height of the inlet portion 141 is lower than a height of the outlet portion 142. In an example, the inlet portion 141 on the first side portion A may be located at a low position. In addition, to prevent rainwater from pouring or sputtering into the cabinet 120, the inlet portion 141 may also be kept at an appropriate height. For example, the inlet portion 141 may be approximately 500 mm away from the bottom of the cabinet 120. The outlet portion 142 is disposed on the second side portion B opposite to the first side portion A, and is disposed at a high position relative to the inlet portion 141. Therefore, gas convection can be formed between the inlet portion 141 and the outlet portion 142, and an overall gas flow direction from bottom to top is conducive to exhausting the flammable gas with a low density from the outlet portion 142. In some embodiments of this disclosure, the inlet portion 141 includes two inlets arranged separately from each other, and the two inlets are distributed triangularly with the outlet portion 142. In this manner, a triangular air duct design of bottom air inlet and top air outlet can be provided in the cabinet 120, to effectively avoid forming a gas flow loop in the cabinet 120, and ensure that flammable gas at different gas densities and at different positions can be smoothly exhausted from the cabinet 120. In addition, when the pressure in the cabinet 120 is excessively high, internal gas may be released through the inlet portion 141 and the outlet portion 142, to implement a pressure relief function, and therefore avoid disintegration of the cabinet 120 due to excessively high pressure to cause a destructive effect.

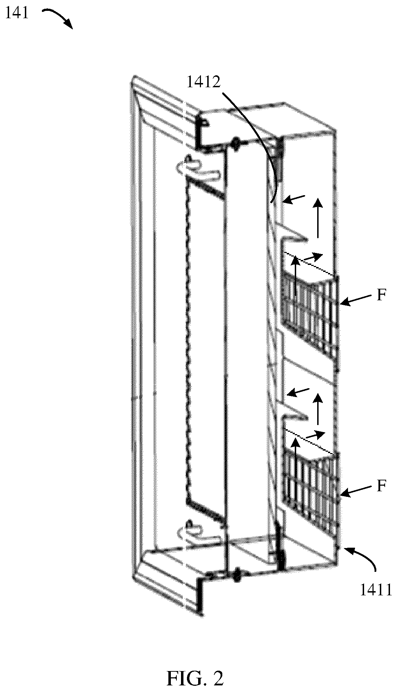

FIG. 2 is a sectional view of the inlet portion 141 of the ventilation apparatus 140 according to an embodiment of this disclosure. The inlet portion 141 may include a zigzag channel 1411 and a first filter layer 1412. The zigzag channel 1411 is configured to receive and flow gas from the outer part of the cabinet 120, and the first filter layer 1412 is configured to filter the gas passing through the inlet portion 141. In an example, the inlet portion 141 may be divided into two layers of structures, where the zigzag channel 1411 is disposed in a part facing the outer part of the cabinet 120, and the first filter layer 1412 is disposed in a part facing the inner part of the cabinet. The zigzag channel 1411 may be formed in a manner similar to designing a maze. For example, as shown in FIG. 2, an approximately U-shaped component may be arranged in an upper part in an opening-to-left manner, an approximately S-shaped component may be arranged in a middle part, and another approximately U-shaped component may be arranged in a lower part in an opening-to-right manner. The three components partially overlap each other, to form two S-shaped gas flow channels. Two Fs in FIG. 2 separately indicate examples of gas flow directions of the two channels. The zigzag channel 1411 is disposed, to prevent a foreign body with a large size from entering the cabinet 120 while ensuring gas flow into the cabinet 120. In some embodiments, a grid member, for example, a metal net, may be further disposed at an inlet of the zigzag channel 1411, to better filter out the foreign body. The first filter layer 1412 may be made of dust-proof filter cotton, and is close to an outlet of the zigzag channel 1411, to perform second filtering on the gas passing through the inlet portion 141, to filter out small foreign bodies such as sand and dust. However, it may be understood that the first filter layer 1412 may alternatively be made of another appropriate filter material. In this structure, when air is introduced from the outer part of the cabinet 120, specific wind resistance may be provided to avoid direct communication between the inner part and the outer part of the cabinet 120, to avoid affecting temperature control in the cabinet 120 and fire extinguishing effect during fire extinguishing in the cabinet 120.

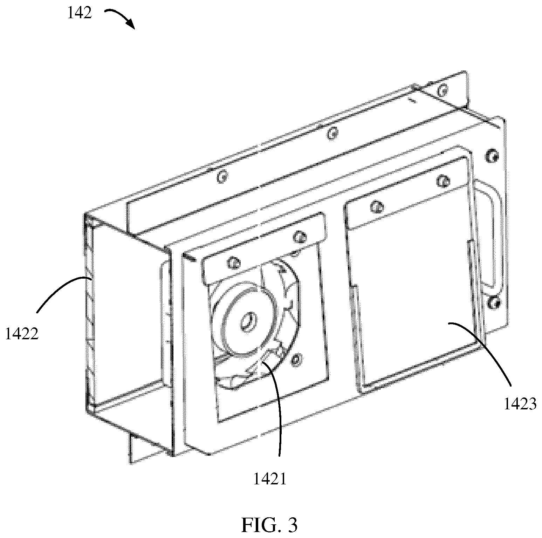

FIG. 3 is a three-dimensional view of the outlet portion 142 of the ventilation apparatus 140 according to an embodiment of this disclosure. The outlet portion 142 includes a fan 1421 and a second filter layer 1422. The fan 1421 is configured to drive gas to flow from the inner part of the cabinet 120 to the outer part of the cabinet 120, and the second filter layer 1422 is configured to filter the gas passing through the outlet portion 142. In an example, compared with the fan 1421, the second filter layer 1422 may be closer to the inner part of the cabinet 120, and may be made of dust-proof filter cotton or another filter material, to prevent external sand and dust from entering the cabinet 120. In addition, similar to the first filter layer 1412, the second filter layer 1422 may also provide appropriate wind resistance to avoid direct communication between the inner part and the outer part of the cabinet 120. After being enabled, the fan 1421 may extract the gas inner part the cabinet 120 through the second filter layer 1422 and exhaust the gas to the outer part of the cabinet 120. Based on an actual requirement, for example, based on a volume or ventilation volume of the cabinet 120, the fan 1421 may include one, two, or any other quantity of exhaust fans. In addition, in addition to being disposed outer part the outlet portion 142, the fan may be disposed at another appropriate position based on a requirement. For example, the fan may alternatively be disposed at the inlet portion 141. Fans are disposed at some positions in the cabinet 120, or disposed at a plurality of different positions, to obtain different ventilation effects.

In some embodiments of this disclosure, the outlet portion 142 may further include a barrier 1423, and the barrier 1423 is configured to: close the outlet portion 142, and open the outlet portion 142 under an action of the gas flowing from the inner part of the cabinet 120 to the outer part of the cabinet 120. In an example, the barrier 1423 may be disposed on an outer side of the fan 1421, and is, for example, integrally formed in a plate shape or a sheet shape. For example, a higher side edge of the barrier 1423 may be fixed, and the other lower side edge may be freely rotated to form a gravity pendulum blade. Therefore, when there is no gas flow from the inner part to the outer part of the cabinet 120 or gas flow is weak, for example, when the fan 1421 is not enabled, the barrier 1423 may close the outlet portion 142 due to a gravity effect, to prevent direct communication between the inner part and the outer part of the cabinet 120, and avoid affecting temperature control in the cabinet 120 and an effect of fire extinguishing in the cabinet. When there is strong gas flow from the inner part to the outer part of the cabinet 120, for example, when the fan 1421 is enabled or atmospheric pressure in the cabinet 120 is excessively high (due to reasons such as release of a fire extinguishing agent in the cabinet, opening of a valve of the energy storage device for air inlet, or explosion in the cabinet), the barrier 1423 may be opened under driving of flowing gas to exhaust the flammable gas, or exhaust the highpressure gas in the cabinet 120 to relieve pressure. It may be understood that an implementation of the barrier 1423 is not limited thereto, and may be in another appropriate form. For example, a plate body of the barrier 1423 may alternatively be predisposed at a position of the closed outlet portion 142 by using a spring or another elastic element other than gravity.

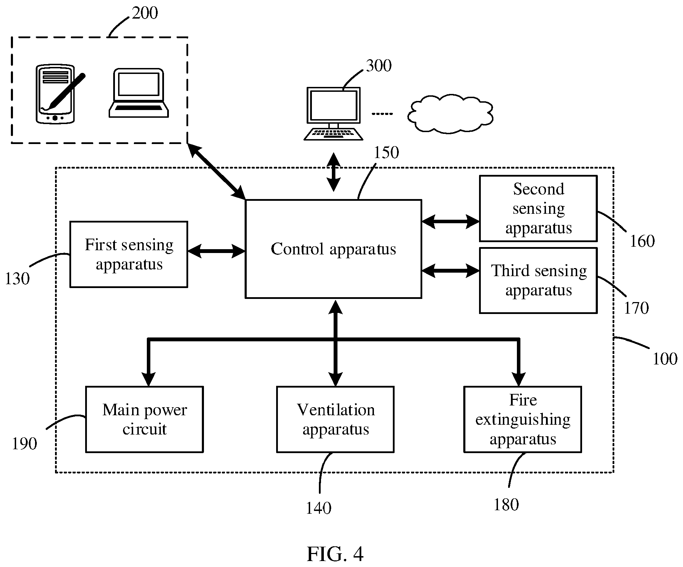

FIG. 4 is a schematic block diagram of the energy storage system 100 and a related peripheral device according to an embodiment of this disclosure. In this embodiment of this disclosure, the energy storage system 100 may further include a control apparatus 150. The control apparatus 150 is communicatively coupled to the first sensing apparatus 130 and the ventilation apparatus 140, and is configured to: receive sensing information indicating the concentration of the flammable gas from the first sensing apparatus 130, and generate, based on the sensing information from the first sensing apparatus 130, a signal for controlling the ventilation apparatus 140. In an example, the first sensing apparatus 130 may send sensing information related to accumulation of the flammable gas in the cabinet 120 to the control apparatus 150. When the control apparatus 150 finds that the concentration of the flammable gas exceeds a safety range, the control apparatus 150 may control the ventilation apparatus 140, for example, may enable the ventilation apparatus 140 to exhaust the flammable gas, to eliminate fire and explosion risks as much as possible.

In some embodiments of this disclosure, the energy storage system 100 further includes a second sensing apparatus 160, a third sensing apparatus 170, and a fire extinguishing apparatus 180. The second sensing apparatus 160 and the third sensing apparatus 170 may be disposed in the cabinet 120, and are configured to separately sense a temperature and smoke in the cabinet 120. The fire extinguishing apparatus 180 is configured to release the fire extinguishing agent in the cabinet 120. In an example, the second sensing apparatus 160 and the third sensing apparatus 170 include sensing components that can sense the temperature and the smoke, to sense a high temperature caused by a fire and smoke generated by burning in the cabinet 120. The fire extinguishing apparatus 180 may include, for example, components such as a fire fighting cylinder, a nozzle, and a fire fighting pipeline, and may release the fire extinguishing agent, where the fire extinguishing agent includes but is not limited to heptafluoropropane or perfluorohexanone. The second sensing apparatus 160, the third sensing apparatus 170, and the fire extinguishing apparatus 180 may be communicatively coupled to the control apparatus 150. In this way, the second sensing apparatus 160 and the third sensing apparatus 170 may send sensing information to the control apparatus 150 in real time. When the control apparatus 150 finds, based on the sensing information, that a fire occurs in the cabinet 120, for example, when the control apparatus 150 finds that the temperature in the cabinet 120 is excessively high and/or smoke occurs, the control apparatus 150 may indicate the fire extinguishing apparatus 180 to be enabled to release the fire extinguishing agent to extinguish the fire. For example, the fire fighting cylinder may release fire extinguishing gas such as heptafluoropropane or perfluorohexanone in the cabinet 120 through the fire fighting pipeline and the nozzle.

In some embodiments, the control apparatus 150 may be communicatively coupled to a user terminal 200. For example, the user terminal 200 includes an electronic device, for example, a smartphone, a notebook computer, a tablet computer, or a desktop computer. In this way, an operator may monitor the energy storage system 100 by using an application program or a website on the user terminal 200. In an embodiment, the operator may directly control the ventilation apparatus 140 by using an application program or a website on the user terminal 200, for example, enable the fan 1421 of the ventilation apparatus 140. This is conducive to processing after the fire in the energy storage system is extinguished. For example, after the fire is extinguished, a large amount of flammable gas may still exist in the cabinet 120. The operator may approach the energy storage system 100 and use the user terminal 200 held by the operator to wirelessly connect the control apparatus 150 to directly enable the ventilation apparatus 140, to exhaust residual flammable gas in the cabinet 120, and eliminate a risk of ignition caused by opening the cabinet 120 after the fire is extinguished.

In some embodiments of this disclosure, the control apparatus 150 and the fan 1421 of the ventilation apparatus 140 are isolated from the energy storage device 110. In an example, the control apparatus 150 and electrical and electronic devices in the ventilation apparatus 140 may be isolated from the energy storage device 110 by using a spacer such as a compartment, and the spacer has a fire resistance capability. In this manner, when the energy storage device 110 releases the flammable gas and causes a fire and ignition, the control apparatus 150 and the fan 1421 may be protected from being damaged to some extent. Therefore, after the fire is extinguished, the user terminal 200 may be used to connect the damage-free control apparatus 150 and enable the fan 1421 to exhaust residual flammable gas in the cabinet 120.

In some embodiments, the control apparatus 150 may be communicatively coupled to a main power circuit 190 of the energy storage system 100. The main power circuit 190 of the energy storage system 100 may include electrical devices such as an electrical line, a power converter, and an electrical switch (for example, a contactor, a circuit breaker, or a disconnect switch), and may be configured to electrically connect the energy storage device 110 of the energy storage system 100 to the outer part, for example, to a power generation system of a photovoltaic power station or a wind power station, and to a power grid or a power transmission system. The control apparatus 150 may control the main power circuit 190 based on a requirement, for example, disconnect the main power circuit 190 to cool the energy storage system 100. In an embodiment, the control apparatus 150 may be communicatively coupled to a monitoring system 300. The monitoring system 300 may be, for example, located far away from the energy storage system 100, for example, located in a monitoring center or a monitoring room. The control apparatus 150 may exchange information with the monitoring system 300 to implement remote monitoring on the energy storage system 100.

The control apparatus 150 may be further communicatively coupled to another device, and may be a device in the energy storage system 100 or a device outer part the energy storage system 100. These devices include but are not limited to a heating ventilation and air conditioning (Heating Ventilation and Air Conditioning, HVAC), a battery management system (Battery Management System, BMS), and a module fan (which may also control a switch by using, for example, a BMS and/or an auxiliary power supply) used for the energy storage device 110. It should be noted that the control apparatus 150 may be a single integrated controller, and may implement, in a centralized manner, various control tasks required in the energy storage system 100, such as controlling the fire extinguishing apparatus, controlling the ventilation apparatus, and implementing battery management. However, the control apparatus 150 may also include a plurality of controllers, for example, may include a fire fighting controller, a ventilation controller, a battery management controller, and a container monitoring unit (Container Monitoring Unit, CMU). For example, the container monitoring unit CMU may serve as a central controller to coordinate operations of other controllers. For example, the container monitoring unit CMU may indirectly control enabling and disabling of the fan 1421 of the ventilation apparatus 140 through the ventilation controller or a control unit. In an embodiment, the fire fighting controller may be configured to control and coordinate communication and operations of the second sensing apparatus 160, the third sensing apparatus 170, the fire extinguishing apparatus 180, and an optional fire alarm apparatus, to form an independent fire fighting system (Fire Fighting System, FFS) with these apparatuses. However, it may be understood that an implementation of the control apparatus 150 is not limited thereto, and the control apparatus 150 may be implemented in another appropriate manner. For example, various functions may be combined based on a requirement to be integrated into several controllers to form the control apparatus 150. In addition, any appropriate communication manner may be used between a plurality of controllers of the control apparatus 150, and between the control apparatus 150 and various devices, apparatuses, and systems mentioned above. These communication manners include but are not limited to dry contact, RS232, RS485, CAN (Controller Area Network), Ethernet, optical fiber, Wi-Fi, Bluetooth, ZigBee, and the like.

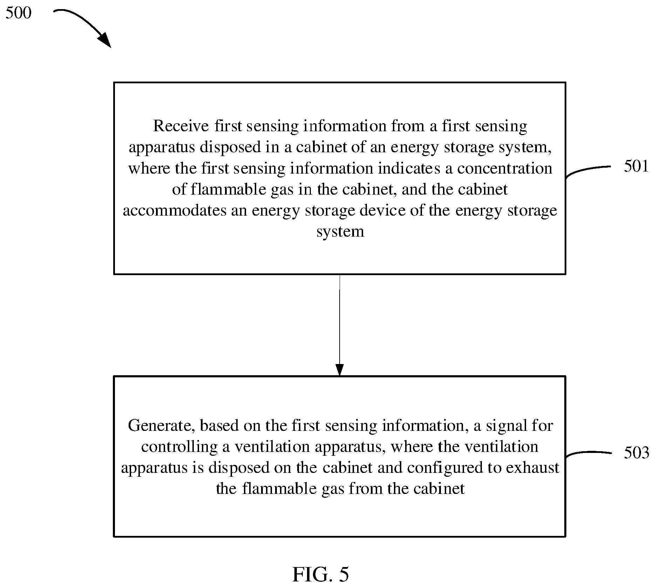

FIG. 5 is a schematic block diagram of a control method 500 for an energy storage system 100 according to an embodiment of this disclosure. The method 500 may be implemented in the energy storage system 100 in FIG. 1 and FIG. 4, and is performed by the control apparatus 150. It may be understood that the foregoing aspects described in FIG. 1 and FIG. 4 are applicable to the method 500. For the purpose of discussion, the method 500 is described with reference to FIG. 1 and FIG. 4.

At block 501, the control apparatus 150 receives first sensing information from the first sensing apparatus 130 disposed in the cabinet 120 of the energy storage system 100, where the first sensing information indicates a concentration of flammable gas in the cabinet 120, and the cabinet 120 accommodates the energy storage device 110 of the energy storage system 100. In this manner, the control apparatus 150 may determine in real time whether flammable gas accumulation exists in the cabinet 120. In some embodiments, the method 500 may further include: The control apparatus 150 receives second sensing information from the second sensing apparatus 160 disposed in the cabinet 120, where the second sensing information indicates a temperature in the cabinet 120. In some embodiments, the method 500 may further include: The control apparatus 150 receives third sensing information from the third sensing apparatus 170 disposed in the cabinet 120, where the third sensing information indicates a concentration of smoke in the cabinet 120. The temperature and the concentration of the smoke in the cabinet 120 may indicate whether burning or a fire exists in the cabinet 120. Therefore, by obtaining information related to the temperature and the smoke, the control apparatus 150 may evaluate a safety condition in the cabinet 120 in real time.

At block 502, the control apparatus 150 generates, based on the first sensing information, a signal for controlling the ventilation apparatus 140. The ventilation apparatus 140 is disposed on the cabinet 120 and is configured to exhaust the flammable gas from the cabinet 120. For example, the control apparatus 150 may evaluate the first sensing information to determine whether flammable gas accumulation exists in the cabinet 120. The flammable gas accumulation is likely to cause a fire or explosion in a high temperature or fire condition. Therefore, the control apparatus 150 may determine, based on the first sensing information, whether the ventilation apparatus 140 needs to perform a corresponding operation, to exhaust the flammable gas in time. In this manner, flammable gas accumulation may be detected in advance before a fire occurs, and an active preventive measure is taken, to avoid thermal runaway diffusion of the energy storage device 110 and eliminate a safety risk. In addition, the control apparatus 150 may further determine, based on the temperature indicated by the second sensing information and the concentration of the smoke indicated by the third sensing information, whether burning of flammable gas exists in the cabinet 120 or even a fire has been triggered. When a fire has occurred, the fire extinguishing apparatus 180 may need to be enabled to extinguish the fire, and the ventilation apparatus 140 needs to cooperate with the fire extinguishing apparatus to perform an operation, for example, stop ventilation to prevent external air from entering the cabinet 120 and affecting a fire extinguishing effect. It can be learned that the control apparatus 150 may comprehensively determine, based on the first sensing information indicating the concentration of the flammable gas and optionally based on the second sensing information and the third sensing information indicating a fire, how to control the ventilation apparatus 140, to eliminate a fire risk or extinguish a fire as soon as possible.

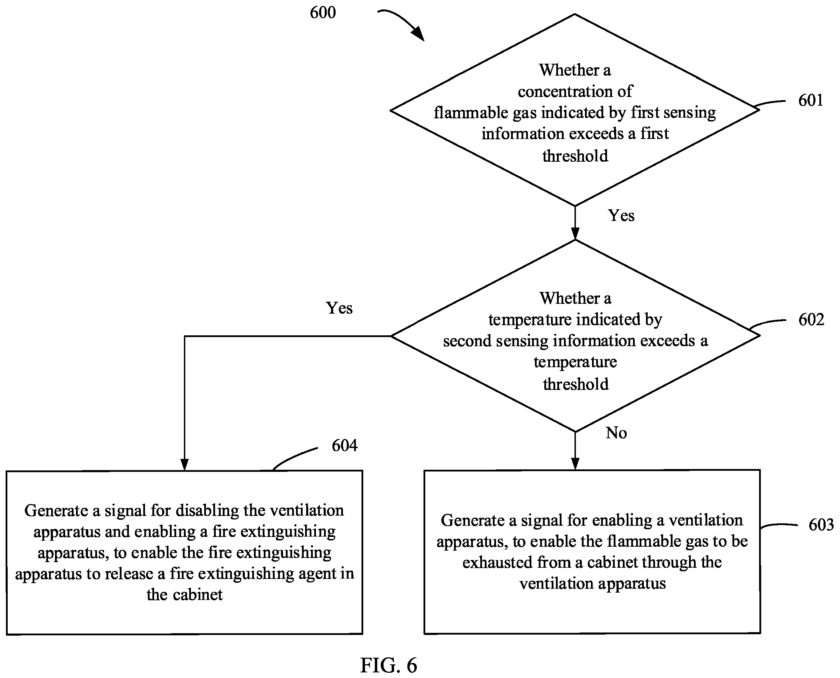

FIG. 6 is a schematic block diagram of an example process 600 of generating, based on the first sensing information, the signal for controlling the ventilation apparatus 140 according to an embodiment of this disclosure.

At block 601, the control apparatus 150 determines whether the concentration of the flammable gas indicated by the first sensing information exceeds a first threshold. In an example, after receiving the first sensing information, the control apparatus 150 may compare the concentration of the flammable gas indicated by the first sensing information with the predefined first threshold, where the first threshold represents a flammable gas concentration value that may affect system safety, and may be set in a manner of ensuring a specific safety margin. In other words, if the concentration of the flammable gas exceeds the first threshold, it means that the energy storage device 110 releases the flammable gas due to thermal runaway and generates a specific degree of accumulation.

In some embodiments, the first sensing apparatus 130 that outputs the first sensing information to the control apparatus 150 includes a plurality of gas sensing components, and in a case of threshold comparison, when concentrations of the flammable gas indicated by sensing information of more than half of the gas sensing components are greater than the threshold, it is determined that the concentration of the flammable gas indicated by the first sensing information is greater than the threshold. Similarly, when it needs to be determined that the concentration of the flammable gas indicated by the first sensing information is less than the threshold, concentrations of the flammable gas indicated by sensing information of more than half of the gas sensing components need to be less than the threshold. Through use of control logic of minorities submitting to majorities, when some sensing components are faulty or abnormal, sensing results of these faulty or abnormal sensing components can be excluded, to avoid misjudgment. In the following descriptions, the control logic of minorities submitting to majorities may be used in threshold comparison of gas concentrations of a plurality of gas sensing components. However, it may be understood that an implementation of the threshold comparison is not limited thereto, and other appropriate control logic may also be used. For example, alternatively, when gas concentrations sensed by a predetermined quantity (for example, more than two) of gas sensing components exceed the threshold, it may be determined that the concentration of the flammable gas in the cabinet 120 exceeds the threshold. Alternatively, different weights may be set for different gas sensing components, and the weights may be set based on flammable gas accumulation probabilities at different positions. For example, a sensing component close to the energy storage device 110 and/or a sensing component close to the top of the cabinet 120 may have a high weight. Therefore, gas concentrations of the gas sensing components may be multiplied by the corresponding weights, and then a sum operation is performed, to implement threshold comparison.

At block 602, when the concentration of the flammable gas indicated by the first sensing information exceeds the first threshold, the control apparatus 150 determines whether the temperature indicated by the second sensing information exceeds a temperature threshold. As described above, the control apparatus 150 may receive, from the second sensing apparatus 160, the second sensing information indicating the temperature in the cabinet 120. Considering that the concentration of the flammable gas exceeds the first threshold at this time, a status in the cabinet 120 may be further determined based on other sensing information. Depending on different statuses in the cabinet 120, for example, whether a fire has occurred, the ventilation apparatus 140 may be controlled in different manners. In addition, if the concentration of the flammable gas does not exceed the first threshold, the control apparatus 150 may continue to maintain monitoring.

At block 603, when the temperature does not exceed the temperature threshold, the control apparatus 150 generates a signal for enabling the ventilation apparatus 140, to exhaust the flammable gas from the cabinet 120 through the ventilation apparatus 140. If the temperature indicated by the second sensing information does not exceed the predefined threshold, it indicates that only flammable gas accumulation exists in the cabinet 120, and no fire occurs. In this case, the ventilation apparatus 140 may be enabled, for example, the fan 1421 may be enabled to exhaust the accumulated flammable gas from the cabinet 120, to eliminate a fire risk. In addition, the control apparatus 150 may further enable a module fan configured to dissipate heat for the energy storage device 110, to enhance a ventilation effect.

At block 604, when the temperature exceeds the temperature threshold, the control apparatus 150 generates a signal for disabling the ventilation apparatus 140 and enabling the fire extinguishing apparatus 180, to enable the fire extinguishing apparatus 180 to release a fire extinguishing agent in the cabinet 120. If the concentration of the flammable gas in the cabinet 120 exceeds the first threshold and the temperature exceeds the predefined threshold, it may be determined that a fire has occurred in the energy storage system 100. In this case, ventilation needs to be stopped to avoid air circulation between the cabinet 120 and an external environment, and the fire extinguishing agent or fire extinguishing gas needs to be released to extinguish the fire.

In some embodiments, when the temperature indicated by the second sensing information exceeds the temperature threshold and the concentration of the smoke indicated by the third sensing information exceeds a smoke threshold, the control apparatus 150 generates a signal for disabling the ventilation apparatus 140 and enabling the fire extinguishing apparatus 180, to enable the fire extinguishing apparatus 180 to release a fire extinguishing agent in the cabinet 120. In an example, in addition to that the concentration of the flammable gas exceeds the first threshold and the temperature exceeds the temperature threshold, conditions for triggering a fire extinguishing operation may further include that the temperature exceeds the threshold and the concentration of the smoke exceeds the threshold. In other words, when it is sensed that both the temperature and the concentration of the smoke are excessively high, the control apparatus 150 can determine that a fire has occurred and therefore may start a fire extinguishing operation. It should be noted that in this case, because it is not necessary to determine whether the concentration of the flammable gas indicated by the first sensing information exceeds the threshold, this step may be performed after block 601 or before block 601.

The control apparatus 150 may further control another related device in the energy storage system 100, to cooperate with a ventilation operation and/or a fire extinguishing operation. In some embodiments of this disclosure, when the concentration of the flammable gas indicated by the first sensing information exceeds a second threshold, the control apparatus 150 generates a signal for turning off the main power circuit 190 of the energy storage system 100, where the second threshold is less than or equal to the first threshold. Specifically, the second threshold may be a predefined value lower than the first threshold. In other words, before the concentration of the flammable gas exceeds the first threshold, it may be determined whether the concentration of the flammable gas exceeds the lower second threshold. If the concentration of the flammable gas exceeds the second threshold, it indicates that thermal runaway occurs in the energy storage device 110 and a specific amount of flammable gas is released. The control apparatus 150 may turn off the main power circuit 190, to stop charging and/or discharging of the energy storage device 110. This can reduce release of flammable gas and reduce a temperature of the energy storage device 110, to avoid continuous deterioration of the system safety. In some cases, for example, when an energy storage battery used as the energy storage device 110 is large, because a high flammable gas concentration is generated once a battery valve is opened, the second threshold may be set to be equal to the first threshold. Therefore, when the flammable gas concentration exceeds the first threshold or the second threshold, both operations triggered after the two thresholds are exceeded may be performed, to be specific, the main power circuit 190 is turned off and an operation related to the ventilation apparatus 140 is performed. In an embodiment, the control apparatus 150 may further disable devices such as an air conditioner and the module fan. Through disabling of these devices, power consumption of the devices can be reduced, and further heating of the energy storage device 110 can be avoided. In addition, this is also conducive to a subsequent ventilation operation, and reduces interference to a ventilation flow.

In some embodiments of this disclosure, when the concentration of the flammable gas indicated by the first sensing information is less than a third threshold, the control apparatus 150 generates a signal for disabling the ventilation apparatus 140, where the third threshold is less than the second threshold. In an example, after the ventilation apparatus 140 is enabled and the flammable gas is exhausted from the cabinet 120, if the first sensing information output by the first sensing apparatus 130 indicates that the concentration of the flammable gas is less than the third threshold, that is, is decreased to a low level, the ventilation apparatus 140 may stop ventilation. Otherwise, the ventilation apparatus 140 may continue a ventilation operation until the concentration of the flammable gas is less than the third threshold. It can be learned that the third threshold is less than the second threshold, and the second threshold is less than the first threshold. It should be noted that the first threshold, the second threshold, and the third threshold may all be below a lower explosion limited (Lower Explosion Limited, LEL).

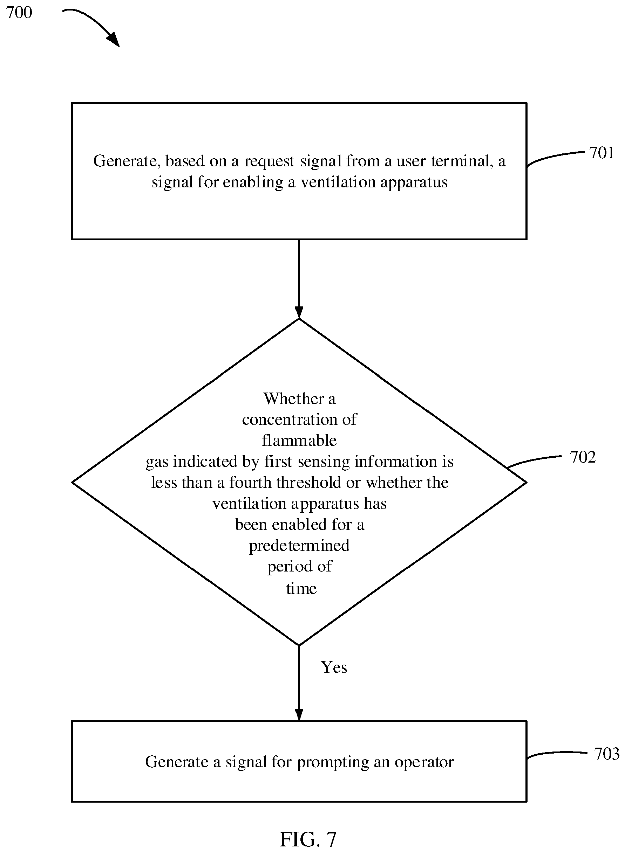

FIG. 7 is a schematic block diagram of an example process 700 after a fire in the energy storage system 100 is extinguished according to an embodiment of this disclosure.

At block 701, the control apparatus 150 generates, based on a request signal from the user terminal 200, a signal for enabling the ventilation apparatus 140. In an example, after a fire occurs in the energy storage system 100 and the fire is extinguished, an operator may determine whether the fire has been completely extinguished. After determining that the fire is completely extinguished, the operator may manually reset a fire alarm signal of the fire alarm apparatus. However, a large amount of flammable gas may still remain in the cabinet 120. Therefore, the operator may use the user terminal 200 (an electronic device such as a smartphone) to access the control apparatus 150, for example, access the control apparatus 150 by using a designed application program or website on the user terminal 200, and enable the ventilation apparatus 140 by using a man-machine interface of the application program or website. In this manner, the operator may enable the ventilation apparatus 140 again by using a portable electronic device through a simple operation, to perform an operation of exhausting the flammable gas after the fire.

At block 702, the control apparatus 150 determines whether the concentration of the flammable gas indicated by the first sensing information is less than a fourth threshold, or determines whether the ventilation apparatus 140 has been enabled for a predetermined period of time. In an example, after the fire, when the first sensing apparatus 130 is still capable of working, the first sensing apparatus 130 may be used to obtain information related to a concentration of the residual flammable gas. When the first sensing apparatus 130 cannot work, the ventilation apparatus 140 may continuously perform ventilation and gas exhausting, and it is determined whether continuous exhaust time reaches predetermined duration. The predetermined duration may be determined based on an exhaust volume of the ventilation apparatus 140 and a volume of the cabinet 120.

At block 703, when the concentration of the flammable gas indicated by the first sensing information is less than the fourth threshold, or when the ventilation apparatus 140 is enabled based on the request signal and the predetermined period of time elapses, the control apparatus 150 generates a signal for prompting the operator. In an example, if the sensed concentration of the flammable gas is less than the fourth threshold (where for example, the fourth threshold may be the same as the third threshold), or if the ventilation apparatus 140 continuously performs ventilation for the predetermined duration, the control apparatus 150 may determine that the residual flammable gas has been almost exhausted from the cabinet 120. For example, the fourth threshold and the predetermined duration may be set to ensure that a final concentration of the flammable gas in the cabinet 120 is below 10% of the lower explosion limited LEL, to ensure sufficient safety. After it is determined that the residual flammable gas has been almost exhausted, the control apparatus 150 may send a prompt signal to remind the operator that the cabinet 120 may be opened currently. The signal may be, for example, light or sound that can be sensed by the operator. In this manner, after fire extinguishing is completed, the operator can conveniently connect to the control apparatus 150 of the energy storage system 100 through the user terminal 200, and enable the ventilation apparatus 140 to exhaust the residual flammable gas, to reduce the concentration of the flammable gas in the cabinet 120 to a value below the lower explosion limited. This avoids an ignition or explosion risk when the cabinet 120 is opened after fire extinguishing, and protects safety of the operator.

In addition, although the operations are described in a specific order, this should be understood as requiring the operations to be performed in the specific order or in a sequential order, or requiring all the illustrated operations to be performed to achieve a desired result. In specific circumstances, multitasking and parallel processing may be advantageous.

## Claims

1. An energy storage system (100), comprising:
a cabinet (120);
an energy storage device (110), disposed in the cabinet (120);
a first sensing apparatus (130), disposed in the cabinet (120), and configured to sense a concentration of flammable gas in the cabinet (120);
a ventilation apparatus (140), disposed on the cabinet (120), wherein the ventilation apparatus (140) is configured to exhaust the flammable gas from the cabinet (120); and
a control apparatus (150), communicatively coupled to the first sensing apparatus (130) and the ventilation apparatus (140), and configured to: receive first sensing information indicating the concentration of the flammable gas from the first sensing apparatus (130), and generate, based on the first sensing information, a signal for controlling the ventilation apparatus (140),
wherein the ventilation apparatus (140) comprises an inlet portion (141) and an outlet portion (142), the inlet portion (141) is disposed on a first side portion of the cabinet (120), the outlet portion (142) is disposed on a second side portion of the cabinet (120), the first side portion is opposite to the second side portion, and a height of the inlet portion (141) is lower than a height of the outlet portion (142), and
wherein the inlet portion (141) comprises two inlets arranged separately from each other, and the two inlets are distributed triangularly with the outlet portion (142).

2. The energy storage system (100) according to claim 1, wherein the first sensing apparatus (130) comprises a plurality of gas sensing components, and the plurality of gas sensing components are configured to sense at least one of the following types of flammable gas: carbon monoxide, hydrogen, and a volatile organic compound, and
wherein at least a part of the plurality of gas sensing components is arranged at the top of the cabinet (120).

3. The energy storage system (100) according to claim 1, wherein the inlet portion (141) comprises a zigzag channel (1411) that is configured to receive and flow gas from an outer part of the cabinet (120) and a first filter layer (1412) that is configured to filter the gas passing through the inlet portion (141).

4. The energy storage system (100) according to claim 1, wherein the outlet portion (142) comprises a fan (1421) that is configured to drive gas to flow from an inner part of the cabinet (120) to an outer part of the cabinet (120) and a second filter layer (1422) that is configured to filter the gas passing through the outlet portion (142).

5. The energy storage system (100) according to claim 4, wherein the outlet portion (142) further comprises a barrier (1423), and the barrier (1423) is configured to: close the outlet portion (142), and open the outlet portion (142) under an action of the gas flowing from the inner part of the cabinet (120) to the outer part of the cabinet (120).

6. The energy storage system (100) according to claim 4, wherein the control apparatus (150) and the fan (1421) are isolated from the energy storage device (110).

7. The energy storage system (100) according to claim 1, further comprising:
a second sensing apparatus (160), disposed in the cabinet (120), and configured to sense a temperature in the cabinet (120);
a third sensing apparatus (170), disposed in the cabinet (120), and configured to sense smoke in the cabinet (120); and
a fire extinguishing apparatus (180), configured to release a fire extinguishing agent in the cabinet (120).

8. The energy storage system according to claim 7, wherein the system is further configured to:
when the concentration of the flammable gas indicated by the first sensing information exceeds a first threshold, determine whether the temperature indicated by the second sensing information exceeds a temperature threshold; and
when the temperature does not exceed the temperature threshold, generate a signal for enabling the ventilation apparatus (140), to enable the flammable gas to be exhausted from the cabinet (120) through the ventilation apparatus (140).

9. The energy storage system according to claim 8, wherein the system is further configured to:
when the temperature exceeds the temperature threshold, generate a signal for disabling the ventilation apparatus (140) and enabling the fire extinguishing apparatus (180), to enable the fire extinguishing apparatus (180) to release a fire extinguishing agent in the cabinet (120).

10. The energy storage system according to claim 8, wherein the system is further configured to:
when the concentration of the flammable gas indicated by the first sensing information exceeds a second threshold, generate a signal for turning off a main power circuit (190) of the energy storage system (100), wherein the second threshold is less than or equal to the first threshold, and
when the concentration of the flammable gas indicated by the first sensing information is less than a third threshold, generate a signal for disabling the ventilation apparatus (140), wherein the third threshold is less than the second threshold.

11. The energy storage system according to claim 8, wherein the first sensing apparatus (130) comprises a plurality of gas sensing components, and the system is configured to, in a case of threshold comparison, when concentrations of the flammable gas indicated by sensing information of more than half of the gas sensing components are greater than or less than the threshold, determine that the concentration of the flammable gas indicated by the first sensing information is greater than or less than the threshold.

12. The energy storage system according to claim 7, wherein the system is further configured to:
receive third sensing information from the third sensing apparatus (170) disposed in the cabinet (120), wherein the third sensing information indicates a concentration of smoke in the cabinet (120); and
when the temperature indicated by the second sensing information exceeds a temperature threshold and the concentration of the smoke indicated by the third sensing information exceeds a smoke threshold, generate a signal for disabling the ventilation apparatus (140) and enabling a fire extinguishing apparatus (180), to enable the fire extinguishing apparatus (180) to release a fire extinguishing agent in the cabinet (120).

13. The energy storage system according to claim 9 or 12, the system further adapted to:
generate, based on a request signal from a user terminal (200), a signal for enabling the ventilation apparatus (140).

14. The energy storage system according to claim 13, the system further configured to:
generate a signal for prompting an operator when the concentration of the flammable gas indicated by the first sensing information is less than a fourth threshold, or after the ventilation apparatus (140) is enabled based on the request signal and a predetermined period of time elapses.

15. A control method for an energy storage system (100) according to any of claims 1-14, comprising:
receiving first sensing information from the first sensing apparatus (130) disposed in the cabinet (120) of the energy storage system (100), wherein the first sensing information indicates the concentration of flammable gas in the cabinet (120), and the cabinet (120) accommodates the energy storage device (110) of the energy storage system (100); and
generating, based on the first sensing information, the signal for controlling the ventilation apparatus (140), wherein the ventilation apparatus (140) is disposed on the cabinet (120) and configured to exhaust the flammable gas from the cabinet (120).

## Patentansprüche

1. Energiespeichersystem (100), umfassend:
einen Schrank (120);
eine Energiespeichervorrichtung (110), die in dem Schrank (120) angeordnet ist;
eine erste Erfassungseinrichtung (130), die in dem Schrank (120) angeordnet ist und dazu konfiguriert ist, eine Konzentration von brennbarem Gas in dem Schrank (120) zu erfassen;
eine Belüftungseinrichtung (140), die auf dem Schrank (120) angeordnet ist, wobei die Belüftungseinrichtung (140) dazu konfiguriert ist, das brennbare Gas aus dem Schrank (120) abzuführen; und
eine Steuerungseinrichtung (150), die kommunikativ mit der ersten Erfassungseinrichtung (130) und der Belüftungseinrichtung (140) gekoppelt ist und dazu konfiguriert ist: erste Erfassungsinformationen, welche die Konzentration des brennbaren Gases angeben, aus der ersten Erfassungseinrichtung (130) zu empfangen und ein Signal zum Steuern der Belüftungseinrichtung (140) basierend auf den ersten Erfassungsinformationen zu generieren,
wobei die Belüftungseinrichtung (140) einen Einlassabschnitt (141) und einen Auslassabschnitt (142) umfasst, der Einlassabschnitt (141) an einem ersten Seitenabschnitt des Schranks (120) angeordnet ist, der Auslassabschnitt (142) an einem zweiten Seitenabschnitt des Schranks (120) angeordnet ist, der erste Seitenabschnitt dem zweiten Seitenabschnitt gegenüberliegt, und eine Höhe des Einlassabschnitts (141) geringer als eine Höhe des Auslassabschnitts (142) ist, und
wobei der Einlassabschnitt (141) zwei Einlässe umfasst, die getrennt voneinander angeordnet sind, und die zwei Einlässe dreieckig mit dem Auslassabschnitt (142) verteilt sind.

2. Energiespeichersystem (100) nach Anspruch 1, wobei die erste Erfassungseinrichtung (130) eine Vielzahl von Gaserfassungskomponenten umfasst, und die Vielzahl von Gaserfassungskomponenten dazu konfiguriert ist, mindestens eine der folgenden Typen von brennbarem Gas zu erfassen:
Kohlenmonoxid, Wasserstoff und eine flüchtige organische Verbindung, und
wobei mindestens ein Teil der Vielzahl von Gaserfassungskomponenten oben auf dem Schrank (120) angeordnet ist.

3. Energiespeichersystem (100) nach Anspruch 1, wobei der Einlassabschnitt (141) einen Zickzackkanal (1411), der dazu konfiguriert ist, Gas aus einem äußeren Teil des Schranks (120) aufzunehmen und durchzulassen, und eine erste Filterschicht (1412) umfasst, die dazu konfiguriert ist, das Gas zu filtern, das durch den Einlassabschnitt (141) strömt.

4. Energiespeichersystem (100) nach Anspruch 1, wobei der Auslassabschnitt (142) einen Lüfter (1421), der dazu konfiguriert ist, Gas aus einem inneren Teil des Schranks (120) zu einem äußeren Teil des Schranks (120) strömen zu lassen, und eine zweite Filterschicht (1422) umfasst, die dazu konfiguriert ist, das Gas zu filtern, das durch den Auslassabschnitt (142) strömt.

5. Energiespeichersystem (100) nach Anspruch 4, wobei der Auslassabschnitt (142) ferner eine Barriere (1423) umfasst, und die Barriere (1423) dazu konfiguriert ist: den Auslassabschnitt (142) zu verschließen und den Auslassabschnitt (142) unter Einwirkung des Gases, das aus dem inneren Teil des Schranks (120) zu dem äußeren Teil des Schranks (120) strömt, zu öffnen.

6. Energiespeichersystem (100) nach Anspruch 4, wobei die Steuerungseinrichtung (150) und der Lüfter (1421) von der Energiespeichervorrichtung (110) isoliert sind.

7. Energiespeichersystem (100) nach Anspruch 1, ferner umfassend:
eine zweite Erfassungseinrichtung (160), die in dem Schrank (120) angeordnet ist und dazu konfiguriert ist, eine Temperatur in dem Schrank (120) zu erfassen;
eine dritte Erfassungseinrichtung (170), die in dem Schrank (120) angeordnet ist und dazu konfiguriert ist, Rauch in dem Schrank (120) zu erfassen; und
eine Feuerlöscheinrichtung (180), die dazu konfiguriert ist, ein Feuerlöschmittel in dem Schrank (120) freizusetzen.

8. Energiespeichersystem nach Anspruch 7, wobei das System ferner dazu konfiguriert ist:
wenn die Konzentration des brennbaren Gases, die durch die ersten Erfassungsinformationen angezeigt wird, einen ersten Schwellenwert überschreitet, zu bestimmen, ob die Temperatur, die durch die zweiten Erfassungsinformationen angezeigt wird, einen Temperaturschwellenwert überschreitet; und
wenn die Temperatur den Temperaturschwellenwert nicht überschreitet, ein Signal zum Aktivieren der Belüftungseinrichtung (140) zu generieren, um zu ermöglichen, dass das brennbare Gas über die Belüftungseinrichtung (140) aus dem Schrank (120) abgeführt wird.

9. Energiespeichersystem nach Anspruch 8, wobei das System ferner dazu konfiguriert ist:
wenn die Temperatur den Temperaturschwellenwert überschreitet, ein Signal zum Deaktivieren der Belüftungseinrichtung (140) und Aktivieren der Feuerlöscheinrichtung (180) zu generieren, um zu ermöglichen, dass die Feuerlöscheinrichtung (180) ein Feuerlöschmittel in dem Schrank (120) freisetzt.

10. Energiespeichersystem nach Anspruch 8, wobei das System ferner dazu konfiguriert ist:
wenn die Konzentration des brennbaren Gases, die durch die ersten Erfassungsinformationen angezeigt wird, einen zweiten Schwellenwert überschreitet, ein Signal zum Abschalten eines Hauptstromkreises (190) des Energiespeichersystems (100) zu generieren, wobei der zweite Schwellenwert kleiner oder gleich dem ersten Schwellenwert ist, und
wenn die Konzentration des brennbaren Gases, die durch die erste Erfassungsinformationen angezeigt wird, unter einem dritten Schwellenwert liegt, ein Signal zum Deaktivieren der Belüftungseinrichtung (140) zu generieren, wobei der dritte Schwellenwert kleiner als der zweite Schwellenwert ist.

11. Energiespeichersystem nach Anspruch 8, wobei die erste Erfassungseinrichtung (130) eine Vielzahl von Gaserfassungskomponenten umfasst, und das System dazu konfiguriert ist, im Falle eines Schwellenwertvergleichs, wenn Konzentrationen des brennbaren Gases, die durch die Erfassungsinformationen von mehr als der Hälfte der Gaserfassungskomponenten angezeigt werden, größer oder kleiner als der Schwellenwert sind, zu bestimmen, dass die Konzentration des brennbaren Gases, die durch die ersten Erfassungsinformationen angezeigt wird, größer oder kleiner als der Schwellenwert ist.

12. Energiespeichersystem nach Anspruch 7, wobei das System ferner dazu konfiguriert ist:
dritte Erfassungsinformationen aus der dritten Erfassungseinrichtung (170), die in dem Schrank (120) angeordnet ist, zu empfangen, wobei die dritten Erfassungsinformationen eine Rauchkonzentration in dem Schrank (120) anzeigen; und
wenn die Temperatur, die durch die zweiten Erfassungsinformationen angezeigt wird, einen Temperaturschwellenwert überschreitet und die Rauchkonzentration, die durch die dritten Erfassungsinformationen angezeigt wird, einen Rauchschwellenwert überschreitet, ein Signal zum Deaktivieren der Belüftungseinrichtung (140) und zum Aktivieren einer Feuerlöscheinrichtung (180) zu generieren, um zu ermöglichen, dass die Feuerlöscheinrichtung (180) ein Feuerlöschmittel in dem Schrank (120) freisetzt.

13. Energiespeichersystem nach Anspruch 9 oder 12, wobei das System ferner dazu geeignet ist:
ein Signal zum Aktivieren der Belüftungseinrichtung (140) basierend auf einem Anforderungssignal aus einem Benutzerendgerät (200) zu generieren.

14. Energiespeichersystem nach Anspruch 13, wobei das System ferner dazu konfiguriert ist:
ein Signal zum Auffordern eines Bedieners zu generieren, wenn die Konzentration des brennbaren Gases, die durch die ersten Erfassungsinformationen angezeigt wird, geringer als ein vierter Schwellenwert ist oder nachdem die Belüftungseinrichtung (140) basierend auf dem Anforderungssignal aktiviert wurde und eine vorbestimmte Zeitspanne verstrichen ist.

15. Steuerungsverfahren für ein Energiespeichersystem (100) nach einem der Ansprüche 1-14, umfassend:
Empfangen erster Erfassungsinformationen aus der ersten Erfassungseinrichtung (130), die in dem Schrank (120) des Energiespeichersystems (100) angeordnet ist, wobei die ersten Erfassungsinformationen die Konzentration von brennbarem Gas in dem Schrank (120) anzeigen und der Schrank (120) die Energiespeichervorrichtung (110) des Energiespeichersystems (100) aufnimmt; und
Generieren des Signals zum Steuern der Belüftungseinrichtung (140) basierend auf den ersten Erfassungsinformationen, wobei die Belüftungseinrichtung (140) auf dem Schrank (120) angeordnet ist und dazu konfiguriert ist, das brennbare Gas aus dem Schrank (120) abzuführen.

## Revendications

1. Système de stockage d'énergie (100), comprenant :
une armoire (120) ;
un dispositif de stockage d'énergie (110), disposé dans l'armoire (120) ;
un premier appareil de détection (130), disposé dans l'armoire (120), et configuré pour détecter une concentration de gaz inflammable dans l'armoire (120) ;
un appareil de ventilation (140), disposé sur l'armoire (120), dans lequel l'appareil de ventilation (140) est configuré pour évacuer le gaz inflammable de l'armoire (120) ; et
un appareil de commande (150), couplé de manière communicative au premier appareil de détection (130) et à l'appareil de ventilation (140), et configuré pour : recevoir une première information de détection indiquant la concentration du gaz inflammable provenant du premier appareil de détection (130), et générer, sur la base de cette première information de détection, un signal pour commander l'appareil de ventilation (140),
dans lequel l'appareil de ventilation (140) comprend une partie d'entrée (141) et une partie de sortie (142), la partie d'entrée (141) est disposée sur une première partie latérale de l'armoire (120), la partie de sortie (142) est disposée sur une seconde partie latérale de l'armoire (120), la première partie latérale est opposée à la seconde partie latérale, et la hauteur de la partie d'entrée (141) est inférieure à une hauteur de la partie de sortie (142), et
dans lequel la partie d'entrée (141) comprend deux entrées disposées séparément l'une de l'autre, et les deux entrées sont réparties de manière triangulaire avec la partie de sortie (142).

2. Système de stockage d'énergie (100) selon la revendication 1, dans lequel le premier appareil de détection (130) comprend une pluralité de composants de détection de gaz, et la pluralité de composants de détection de gaz est configurée pour détecter au moins un des types de gaz inflammables suivants : monoxyde de carbone, hydrogène et un composé organique volatil, et
dans lequel au moins une partie de la pluralité de composants de détection de gaz est disposée en haut de l'armoire (120).

3. Système de stockage d'énergie (100) selon la revendication 1, dans lequel la partie d'entrée (141) comprend un canal en zigzag (1411) qui est configuré pour recevoir et faire circuler le gaz provenant d'une partie extérieure de l'armoire (120) et une première couche filtrante (1412) qui est configurée pour filtrer le gaz passant par la partie d'entrée (141).

4. Système de stockage d'énergie (100) selon la revendication 1, dans lequel la partie de sortie (142) comprend un ventilateur (1421) qui est configuré pour faire circuler le gaz d'une partie intérieure de l'armoire (120) vers une partie extérieure de l'armoire (120) et une seconde couche filtrante (1422) qui est configurée pour filtrer le gaz passant par la partie de sortie (142).

5. Système de stockage d'énergie (100) selon la revendication 4, dans lequel la partie de sortie (142) comprend également une barrière (1423), et la barrière (1423) est configurée pour : fermer la partie de sortie (142) et ouvrir la partie de sortie (142) sous une action du gaz s'écoulant de la partie intérieure de l'armoire (120) vers la partie extérieure de l'armoire (120).

6. Système de stockage d'énergie (100) selon la revendication 4, dans lequel l'appareil de commande (150) et le ventilateur (1421) sont isolés du dispositif de stockage d'énergie (110).

7. Système de stockage d'énergie (100) selon la revendication 1, comprenant également :
un deuxième appareil de détection (160), disposé dans l'armoire (120), et configuré pour détecter une température dans l'armoire (120) ;
un troisième appareil de détection (170), disposé dans l'armoire (120) et configuré pour détecter la fumée dans l'armoire (120) ; et
un appareil d'extinction d'incendie (180), configuré pour libérer un agent extincteur dans l'armoire (120).

8. Système de stockage d'énergie selon la revendication 7, dans lequel le système est également configuré pour :
lorsque la concentration du gaz inflammable indiquée par la première information de détection dépasse un premier seuil, déterminer si la température indiquée par la deuxième information de détection dépasse un seuil de température ; et
lorsque la température ne dépasse pas le seuil de température, générer un signal pour activer l'appareil de ventilation (140), afin de permettre l'évacuation du gaz inflammable de l'armoire (120) à travers l'appareil de ventilation (140).

9. Système de stockage d'énergie selon la revendication 8, dans lequel le système est également configuré pour :
lorsque la température dépasse le seuil de température, générer un signal pour désactiver l'appareil de ventilation (140) et activer l'appareil d'extinction d'incendie (180), afin de permettre à l'appareil d'extinction d'incendie (180) de libérer un agent extincteur dans l'armoire (120).

10. Système de stockage d'énergie selon la revendication 8, dans lequel le système est également configuré pour :
lorsque la concentration du gaz inflammable indiquée par la première information de détection dépasse un deuxième seuil, générer un signal pour couper un circuit d'alimentation principal (190) du système de stockage d'énergie (100), dans lequel le deuxième seuil est inférieur ou égal au premier seuil, et
lorsque la concentration du gaz inflammable indiquée par la première information de détection est inférieure à un troisième seuil, générer un signal pour désactiver l'appareil de ventilation (140), dans lequel le troisième seuil est inférieur au deuxième seuil.

11. Système de stockage d'énergie selon la revendication 8, dans lequel le premier appareil de détection (130) comprend une pluralité de composants de détection de gaz, et le système est configuré pour, dans le cas d'une comparaison de seuil, lorsque les concentrations du gaz inflammable indiquées par les informations de détection de plus de la moitié des composants de détection de gaz sont supérieures ou inférieures au seuil, déterminer que la concentration du gaz inflammable indiquée par les premières informations de détection est supérieure ou inférieure au seuil.

12. Système de stockage d'énergie selon la revendication 7, dans lequel le système est également configuré pour :
recevoir une troisième information de détection provenant du troisième appareil de détection (170) disposé dans l'armoire (120), dans lequel la troisième information de détection indique une concentration de fumée dans l'armoire (120) ; et
lorsque la température indiquée par la deuxième information de détection dépasse un seuil de température et que la concentration de fumée indiquée par la troisième information de détection dépasse un seuil de fumée, générer un signal pour désactiver l'appareil de ventilation (140) et activer un appareil d'extinction d'incendie (180), afin de permettre à l'appareil d'extinction d'incendie (180) de libérer un agent extincteur dans l'armoire (120).

13. Système de stockage d'énergie selon la revendication 9 ou 12, le système étant également adapté pour :
générer, sur la base d'un signal de demande provenant d'un terminal utilisateur (200), un signal pour activer l'appareil de ventilation (140).

14. Système de stockage d'énergie selon la revendication 13, le système étant également configuré pour :
générer un signal pour inciter un opérateur lorsque la concentration du gaz inflammable indiquée par les premières informations de détection est inférieure à un quatrième seuil, ou après que l'appareil de ventilation (140) est activé sur la base du signal de demande et qu'une période de temps prédéterminée se soit écoulée.

15. Procédé de commande pour un système de stockage d'énergie (100) selon l'une quelconque des revendications 1 à 14, comprenant :
la réception des premières informations de détection provenant du premier appareil de détection (130) disposé dans l'armoire (120) du système de stockage d'énergie (100), dans lequel les premières informations de détection indiquent la concentration de gaz inflammable dans l'armoire (120), et l'armoire (120) contient le dispositif de stockage d'énergie (110) du système de stockage d'énergie (100) ; et
la génération, sur la base des premières informations de détection, du signal pour commander l'appareil de ventilation (140), dans lequel l'appareil de ventilation (140) est disposé sur l'armoire (120) et configuré pour évacuer le gaz inflammable de l'armoire (120).
